# EUROPÄISCHE PATENTSCHRIFT

(11) **EP 4 242 067 B1**
(45) Veröffentlichungstag und Bekanntmachung des Hinweises auf die Patenterteilung: **04.09.2024**
(21) Anmeldenummer: 23158180.2
(22) Anmeldetag: 23.02.2023
(51) Int. Cl.: B60R 11/04, B60R 11/00

(54) **KAMERAHALTERUNG ZUR BEFESTIGUNG AN EINEM FAHRZEUGAUFBAU**
CAMERA MOUNT FOR ATTACHMENT TO A VEHICLE BODY
SUPPORT DE CAMÉRA DESTINÉ À ÊTRE FIXÉ À LA CARROSSERIE D'UN VÉHICULE

(30) Priorität: 07.03.2022 DE 102022105242
(43) Veröffentlichungstag der Anmeldung: 13.09.2023
(73) Patentinhaber: KNORR-BREMSE Systeme für Nutzfahrzeuge GmbH, 80809 München (DE)
(72) Erfinder: SCHMIEDT, Stefan, 82387 Antdorf (DE); MACKE, Wlodzimierz, 82140 Olching (DE); BINDER, Klaus, 83112 Frasdorf (DE); STEHLIK, Ladislav, 46303 Straz nad Nisou (CZ)

(56) Entgegenhaltungen:
- DE-A1- 10 357 781
- DE-A1- 102012 222 905
- DE-A1- 102018 117 383
- DE-A1- 102019 102 298
- FR-A1- 2 893 891
- JP-A- 2016 116 048
- JP-A- 2018 186 360
- KR-A- 20110 114 092

## Beschreibung

Die vorliegende Erfindung betrifft eine Kamerahalterung zur Befestigung an einem Fahrzeugaufbau eines Kraftfahrzeugs gemäß dem Oberbegriff des Anspruchs 1. Die Erfindung betrifft des Weiteren ein Kraftfahrzeug, insbesondere einen Bus oder ein Nutzfahrzeug sowie einen Anhänger, insbesondere einen Nutzfahrzeuganhänger.

Kamerahalterungen zur Befestigung an einem Fahrzeugaufbau sind beispielsweise aus der WO 2004/058542 A1, der WO 2015/088396 A1 oder der JP 2018 186360 A bekannt.

Solche Kamerahalterungen mit darin aufgenommenen Kameras, insbesondere Videokameras, dienen der Verbesserung der Fahrsicherheit. Die in den Kamerahalterungen befestigten Videokameras liefern insbesondere Fahrzeugführern von Nutzfahrzeugen Bildsignale, denen der Fahrzeugführer Informationen über nicht unmittelbar einsehbare Bereiche seitlich, hinter oder auch direkt vor dem Nutzfahrzeug entnehmen kann, um beispielsweise in Abbiegesituationen in einem nicht unmittelbar einsehbaren Bereich sich befindende Personen oder auch Gegenstände frühzeitig erkennen zu können und so eine Kollision zu vermeiden.

Die aus dem Stand der Technik bekannten Kamerahalterungen sind durch ihre relativ zueinander bewegbaren einzelnen Bauteile relativ aufwändig zu fertigen bzw. zu montieren. Insbesondere bei variierbar in ihrer Position fixierbaren Kamerahalterungen ist eine Kalibrierung der Kamera und deren Position notwendig, die nicht in jeder Werkstatt ohne weiteres durchführbar ist.

Bekannt sind auch einfache Haltebleche, an denen die Kameras verschraubt werden können. Allerdings sind diese nicht geeignet, die Kamera vor äußeren Witterungseinflüssen oder auch Beschädigung durch Äste oder dergleichen zu schützen.

Aufgabe der vorliegenden Erfindung ist es, eine Kamerahalterung zur Befestigung an einem Fahrzeugaufbau eines Fahrzeugs, insbesondere eines Busses oder eines Nutzfahrzeugs oder an einem Anhänger eines solchen Fahrzeugs bereitzustellen, die zum einen in einfacher Weise montiert werden kann und die außerdem vor Beschädigungen schützt.

Diese Aufgabe wird durch eine Kamerahalterung mit den Merkmalen des Anspruchs 1 gelöst.

Die erfindungsgemäße Kamerahalterung weist ein an dem Fahrzeugaufbau fixierbares Kameraträgerteil mit wenigstens einem Aufnahmeschacht zur Aufnahme zumindest eines Kamerakorpus einer Kamera auf.

Auf dieses Kameraträgerteil ist ein Hüllgehäuse aufstülpbar.

Das Hüllgehäuse weist eine Aufnahmeöffnung zur Aufnahme des Kameraträgerteils und wenigstens eine in einem Gehäusewandbereich vorgesehene Fensteröffnung auf, in oder hinter der ein Objektiv der Kamera positionierbar ist.

Das Kameraträgerteil und das Hüllgehäuse weisen jeweils Führungskonturen zur Positionierung des Hüllgehäuses auf dem Kameraträgerteil auf, wobei das Kameraträgerteil und das Hüllgehäuse lösbar aneinander befestigbar sind.

Mit einer solchermaßen ausgebildeten Kamerahalterung ist die Kamera in einfacher Weise in das Kameraträgerteil in einer vorbestimmten Position einsetzbar.

Weiter ist das Hüllgehäuse in einfach durchführbarer Weise auf das Kameraträgerteil aufstülpbar. Die Aufstülpbewegung wird dabei durch die Führungskonturen geführt.

Der Aufnahmeschacht ist durch eine Außenwand und eine parallel dazu ausgerichtete Innenwand des Kameraträgerteils begrenzt, wobei die Außenwand und die Innenwand jeweils eine sacklochartige Aussparung mit zueinander parallelen ausgerichteten Gleitkanten aufweisen.

In der Aussparung der Außenwand ist das Objektiv und in der Aussparung der Innenwand ist ein aus einer Rückseite des Kamerakorpus vorstehender Steckanschluss der Kamera aufnehmbar. Der Kamerakorpus ist zwischen der Außenwand und der Innenwand aufnehmbar.

Durch den solchermaßen ausgebildeten Aufnahmeschacht und die Aussparungen in der Außenwand und der Innenwand ist eine einfache Vorfixierung der Kamera ermöglicht.

Die Aussparungen sind dabei bereits so geformt, dass die Kamera ohne weitere Positionskalibrierung in einer für sie vorgesehenen Stellung im Kameraträgerteil positionierbar ist und nach Aufstülpen des Hüllgehäuses ortsfest fixiert ist.

Die lösbare Befestigbarkeit des Hüllgehäuses am Kameraträgerteil ermöglicht eine einfache Vorpositionierung des Hüllgehäuses am Kameraträgerteil, insbesondere in einem Fall, bei dem das Hüllgehäuse nach Aufstülpen auf das am Fahrzeugaufbau befestigte Kameraträgerteil zusätzlich am Fahrzeugaufbau verklebt werden soll. Die Klebefuge übernimmt dabei zusätzlich eine Dichtfunktion.

Vorteilhafte Ausführungsvarianten der Erfindung sind Gegenstand der Unteransprüche.

Die Aussparungen sind dabei bereits so geformt, dass die Kamera ohne weitere Positionskalibrierung in einer für sie vorgesehenen Stellung im Kameraträgerteil positionierbar ist und nach Aufstülpen des Hüllgehäuses ortsfest fixiert ist.

Nach einer alternativen Ausführungsvariante weist der Aufnahmeschacht eine Führungswand aufweist, wobei die Führungswand eine sacklochartige Aussparung mit zueinander parallel ausgerichteten Gleitkanten aufweisen, wobei die Gleitkanten in seitliche Nuten des Kamerakorpus vorstehen.

Auch mit dieser Ausführungsvariante ist eine einfache Vorfixierung der Kamera ermöglicht.

Gemäß einer vorteilhaften Weiterbildung weist das Kameraträgerteil zwei winklig zueinander angeordnete Aufnahmeschächte zur Aufnahme jeweils einer Kamera und das Hüllgehäuse zwei Fensteröffnungen in winklig zueinander ausgerichteten Gehäusewandbereichen zur Aufnahme eines Objektivs einer jeweiligen der Kameras auf.

Eine solchermaßen ausgebildete Kamerahalterung ermöglicht in einfacher Weise die Aufnahme von zwei winklig zueinander positionierten Kameras.

Bei entsprechender winkliger Anordnung der beiden Kameras und vorzugsweise Ausbildung der Kameraobjektive als sogenannte fish-eye-Objektive ist eine quasi Rundumbeobachtung um den Fixierungsort der Kameras am Fahrzeugaufbau ermöglicht.

Denkbar ist auch eine Ausbildung des Kameraträgerteils mit mehr als zwei Aufnahmeschächte zur Aufnahme jeweils einer Kamera und entsprechender Ausbildung des Hüllgehäuses mit einer der Anzahl der Aufnahmeschächte entsprechenden Anzahl von Fensteröffnungen.

In einer bevorzugten Weiterbildung ist das Kameraträgerteil und das Hüllgehäuse durch mehrere lösbare Schnappverbindungen aneinander festgelegt.

In einer vorteilhaften Weiterbildung weist das Kameraträgerteil sich von einer rückseitigen Montagewand in Richtung eines frontseitigen Endes erstreckende Rastzungen mit daran angeformten Rastnasen auf, die im aufgeschobenen Zustand des Hüllgehäuses in jeweilige Rastaufnahmen in der Innenseite einer Gehäusewand des Hüllgehäuses eingerastet sind.

Die Rastnasen sind gemäß einer weiteren vorteilhaften Weiterbildung mit Fasen zum Lösen der Verrastung ab einer vorbestimmten Krafteinwirkung auf das Hüllgehäuse entgegen einer Aufschieberichtung versehen.

Dadurch ist in einfacher Weise bei Bedarf das Hüllgehäuse von dem Kameraträgerteil ablösbar, ohne das Hüllgehäuse zerstören zu müssen.

Gemäß einer weiteren vorteilhaften Ausführungsvariante ist aus der Innenseite der Gehäusewand des Hüllgehäuses im Bereich des frontseitigen Endes eine stiftartig ausgebildete Führungskontur angeformt, die im auf das Kameraträgerteil aufgeschobenen Zustand in eine als Ausnehmung ausgebildete Führungskontur in einer frontseitigen Wand des Kameraträgerteils vorsteht.

Die Führungskonturen des Hüllgehäuses und des Kameraträgerteils ermöglichen so in einfacher Weise eine exakte Positionierung des Hüllgehäuses auf dem Kameraträgerteil, um insbesondere die Fenster des Hüllgehäuses relativ zum Kameraträgerteil exakt auszurichten und so eine teilweise Verdeckung des Objektivs der jeweiligen Kamera zu verhindern.

In einer weiteren bevorzugten Ausführungsvariante ist aus der Innenseite seitlicher Bereiche der Gehäusewand des Hüllgehäuses wenigstens eine als Vorsprung oder Nut ausgebildete Führungskontur angeformt, die im auf das Kameraträgerteil aufgeschobenen Zustand in eine als Ausnehmung oder Vorsprung ausgebildete Führungskontur in der Montagewand des Kameraträgerteils vorsteht.

Auch diese Führungskonturen sorgen für eine exakte Positionierung des Hüllgehäuses auf dem Kameraträgerteil.

Um die in der Kamerahalterung angeordneten Kameras bei durch die Fensteröffnungen des Hüllgehäuses eintretendem Wasser vor Flutung zu schützen, weist gemäß einer weiteren vorteilhaften Ausführungsvariante ein Boden der Gehäusewand des Hüllgehäuses eine Ablauföffnung auf, durch die das eingetretene Wasser aus dem Hüllgehäuse ablaufen kann.

Die Ablauföffnung ist gemäß einer vorteilhaften Weiterbildung in Richtung der Kameras durch Blenden abgeschirmt, die an einer dem Innenraum des Hüllgehäuses abgewandten Außenseite und/oder einer dem Innenraum des Hüllgehäuses zugewandten Innenseite angeordnet, insbesondere angeformt ist bzw. sind.

Gemäß einer weiteren vorteilhaften Ausführungsvariante ist die Aufnahmeöffnung des Hüllgehäuses von einer Dichtlippe zur Anlage am Fahrzeugaufbau umrahmt.

Dies ermöglicht eine zusätzliche Abdichtung des Hüllgehäuses im Anlagebereich zum Fahrzeugaufbau.

In einer vorteilhaften Weiterbildung weist die dem frontseitigen Ende des Hüllgehäuses abgewandte Stirnfläche der Dichtlippe eine Nut zur Aufnahme eines Adhäsivs auf.

Dies ermöglicht bei der Befestigung des Hüllgehäuses am Fahrzeugaufbau die Befüllung der Nut mit einem bevorzugt flüssigen oder zähflüssigen Adhäsiv vor dem Aufstülpen des Hüllgehäuses auf das Kameraträgerteil.

Mithilfe des Adhäsivs erfolgt sodann eine Verklebung des Hüllgehäuses mit dem Fahrzeugaufbau und damit eine zusätzliche Fixierung der Kamerahalterung am Fahrzeugaufbau.

Mit der Verklebung des Hüllgehäuses am Fahrzeugaufbau geht auch eine Entlastung der Schnappverbindungen zwischen Kameraträgerteil und Hüllgehäuse einher, da nach Austrocknen des Adhäsivs dieses den Hauptanteil der Befestigungslast übernimmt.

Gemäß einer weiteren Ausführungsvariante ist die wenigstens eine in dem Gehäusewandbereich vorgesehene Fensteröffnung durch ein transparentes Material verschlossen.

Dies ermöglicht eine wasserdichte Ausführung des Hüllgehäuses.

Das erfindungsgemäße Fahrzeug, insbesondere Bus oder Nutzfahrzeug zeichnet sich durch eine wie oben beschriebene Kamerahalterung aus.

Der erfindungsgemäße Anhänger, insbesondere Nutzfahrzeuganhänger zeichnet sich durch eine wie oben beschriebene Kamerahalterung aus.

Nachfolgend wird ein bevorzugtes Ausführungsbeispiel anhand der beiliegenden Zeichnungen näher erläutert. Es zeigen:
- Figuren 1 und 2: schematische isometrische Darstellungen einer Ausführungsvariante einer erfindungsgemäßen Kamerahalterung mit über ein Kameraträgerteil überstülptem Hüllgehäuse,
- Figuren 3 und 4: isometrische Darstellungen eines mit zwei Kameras bestückten Kameraträgerteil aus unterschiedlichen Perspektiven,
- Figuren 5 und 6: isometrische Darstellungen des Kameraträgerteils ohne eingesetzte Kameras,
- Figur 7: eine isometrische Darstellung des Hüllgehäuses mit darin angeformter Ablauföffnung,
- Figur 8: eine Draufsicht auf die Kamerahalterung auf die Stirnfläche, die am Fahrzeugaufbau befestigt wird,
- Figur 9: eine Draufsicht auf die Kamerahalterung von der Frontseite her,
- Figur 10: eine Schnittdarstellung durch die in Figur 9 mit X bezeichnete Schnittebene zur Darstellung von Führungskonturen des Hüllgehäuses und des Kameraträgerteils,
- Figuren 11 bis 13: isometrische Darstellungen einer mit zwei Kameras bestückten alternativen Ausführungsvariante eines Kameraträgerteil aus unterschiedlichen Perspektiven, Ausführungsvariante die zur Erfindung nicht gehört.
- Figur 14: eine isometrische Darstellung des Kameraträgerteils gemäß Figuren 11 bis 13 und der Kameras vor deren Einsetzen in das Kameraträgerteil und
- Figur 15: eine Draufsicht auf die in den Figuren 11 bis 13 gezeigte Anordnung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Kamerahalterung, Kameraträgerteil, Hüllgehäuse, Aufnahmeschacht, Fensteröffnung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

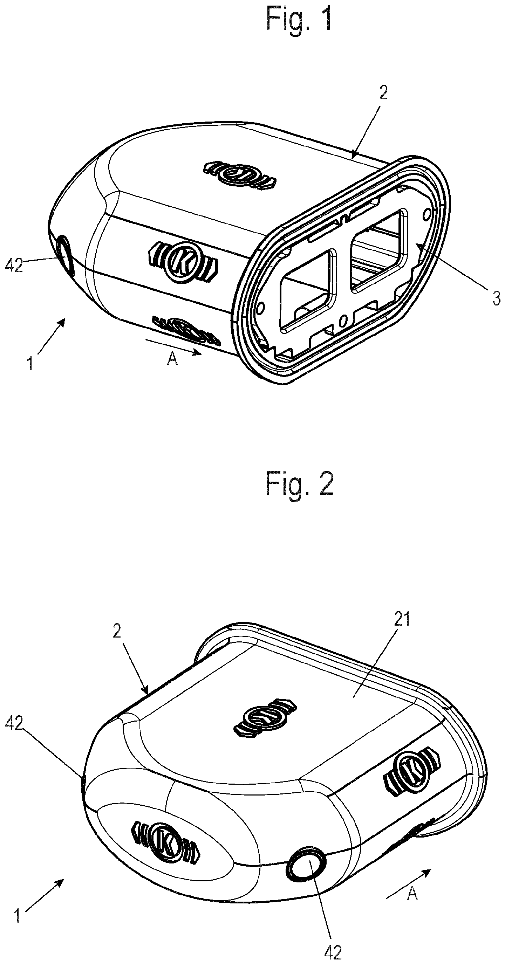

In den **Figuren 1 und 2** ist mit dem Bezugszeichen 1 insgesamt eine Ausführungsvariante einer erfindungsgemäßen Kamerahalterung bezeichnet.

Die Kamerahalterung 1 ist dabei an einem Fahrzeugaufbau eines Kraftfahrzeugs, bevorzugt eines Busses oder Nutzfahrzeugs oder an einem Anhänger eines solchen Kraftfahrzeugs oder Nutzfahrzeugs befestigbar, um je nach Anbringungsort am Fahrzeugaufbau Umgebungsbereiche seitlich, hinter oder vor dem Fahrzeugaufbau für den Fahrzeugführer visuell über das Signal einer oder mehrerer in der Kamerahalterung 1 befestigter Kameras, insbesondere Videokameras sichtbar zu machen, die sind.

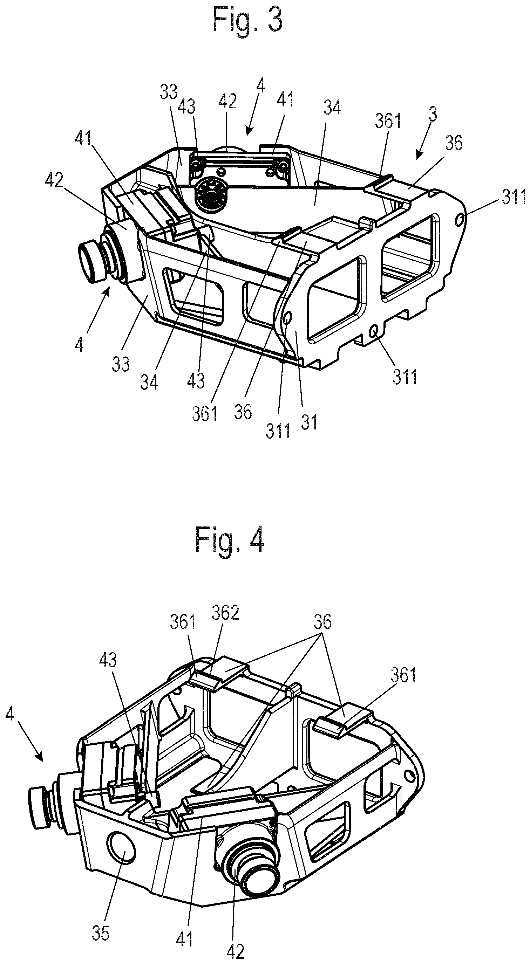

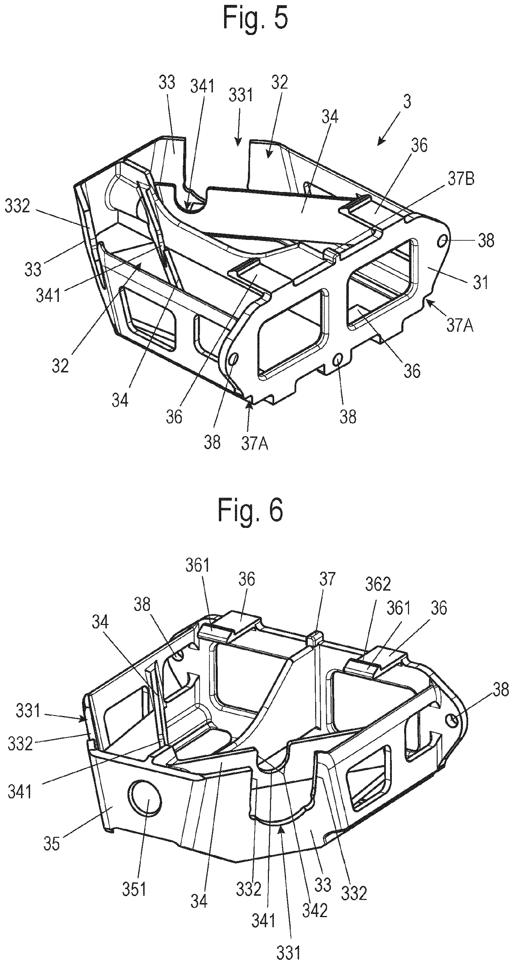

Die Kamerahalterung 1 besteht im Wesentlichen aus einem an dem Fahrzeugaufbau fixierbaren Kameraträgerteil 3, wie es auch in den Figuren 3 - 6 gezeigt ist, sowie einem auf das Kameraträgerteil 3 aufstülpbaren Hüllgehäuse 2, das nach der Fixierung des Kameraträgerteils 3 am Fahrzeugaufbau und dem Einsetzen einer oder im in den Figuren 3 und 4 gezeigten Ausführungsbeispiel zwei Kameras auf das Kameraträgerteil 3 aufgestülpt wird.

Wie in den **Figuren 3 - 6** gezeigt ist, weist das Kameraträgerteil 3 wenigstens einen Aufnahmeschacht 32 zur Aufnahme zumindest eines Kamerakorpus 41 einer Kamera 4 auf.

Bei der hier gezeigten Ausführungsvariante weist das Kameraträgerteil 3 zwei solcher Aufnahmeschächte 32 auf, wobei in jedem der Aufnahmeschächte 32 eine Kamera 4 platzierbar ist.

Das Hüllgehäuse 2 weist in einem im montierten Zustand den Fahrzeugaufbau berührenden rückseitigen Seite eine Aufnahmeöffnung 20 auf, die der Aufnahme des Kameraträgerteils 3 dient.

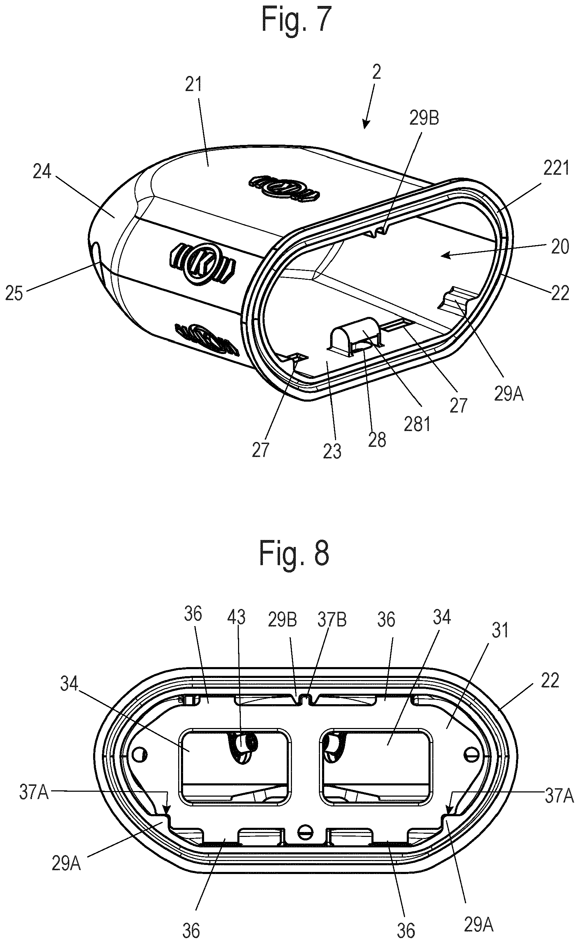

In einem von dem Fahrzeugaufbau entfernten Bereich weist das Hüllgehäuse 2 wenigstens eine in einem Gehäusewandbereich 24 vorgesehene Fensteröffnung 25 auf, gezeigt in **Figur 7****,** in oder hinter der ein Objektiv 42 der Kamera 4 positionierbar ist.

Bei der in den Figuren 1 und 2 gezeigten Ausführungsvariante steht das vordere Ende des Objektivs 42 der Kamera 4 in die Fensteröffnung 25 vor. Die Fensteröffnung 25 ist dementsprechend offen ausgebildet.

Denkbar ist auch, die Fensteröffnung 25 durch ein transparentes Material, beispielsweise ein Glas oder ein durchsichtiger Kunststoff zu verschließen, wobei in diesem Fall der Raum zwischen der Fensteröffnung 25 und dem Kameraträgerteil 3 genügend Raum für die Unterbringung des Objektivs 42 der Kamera 4 lässt.

Wie in den **Figuren** 1, 3, 5 und **8** dargestellt ist, weist das Kameraträgerteil 3 eine Montagewand 31 auf, die am Fahrzeugaufbau befestigt wird, beispielsweise durch Nieten oder Schrauben, die durch dafür vorgesehene Bohrungen 311 in der Montagewand 31 durchgeführt werden können.

Wie weiter in den Figuren 3-6 dargestellt ist, ist jeder der Aufnahmeschächte 32 des Kameraträgerteils 3 durch eine Außenwand 33 und eine parallel dazu ausgerichtete Innenwand 34 des Kameraträgerteils 3 begrenzt.

Die Außenwand 33 weist eine sacklochartige Aussparung 331 mit zueinander parallel ausgerichteten Gleitkanten 332 auf. Weiter weist die Innenwand 34 jeweils eine sacklochartige Aussparung 341 mit zueinander parallel ausgerichteten Gleitkanten 342 auf.

Diese Ausführung ermöglicht ein einfaches Einsetzen einer jeweiligen Kamera 4, wobei die Gleitkanten 332 der Außenwand 33 so weit voneinander beabstandet sind, dass zwischen diesen das Objektiv 42 der Kamera 4 mit seiner Mantelfläche an diesen entlanggleitend einschiebbar ist.

Die Gleitkanten 342 der jeweiligen Innenwand 34 dienen der Aufnahme des Steckanschlusses 43 der Kamera 4, wobei auch hier der Abstand der parallel zueinander laufenden Gleitkanten 342 dem Durchmesser des Steckanschlusses 43 der Kamera 4 entspricht, so dass eine Mantelfläche des Steckanschlusses 43 an den Gleitkanten 342 entlanggleitend einschiebbar ist.

Zwischen den beiden jeweiligen Gleitkanten 332, 342 dient ein jeweiliges teilkreisförmiges Auflager der Lagerung des Objektivs 42 bzw. des Steckanschlusses 43 der Kamera 4, so dass die Kamera 4 in einer hier horizontalen Ebene ortsfest fixiert ist.

Der Abstand zwischen der Innenwand 34 und der Außenwand 33 entspricht bevorzugt der Tiefe des Kamerakorpus 41 der Kamera 4. Als Tiefe des Kamerakorpus 41 wird dabei eine Richtung parallel zur Längsrichtung des Objektivs 41 der jeweiligen Kamera 4 betrachtet.

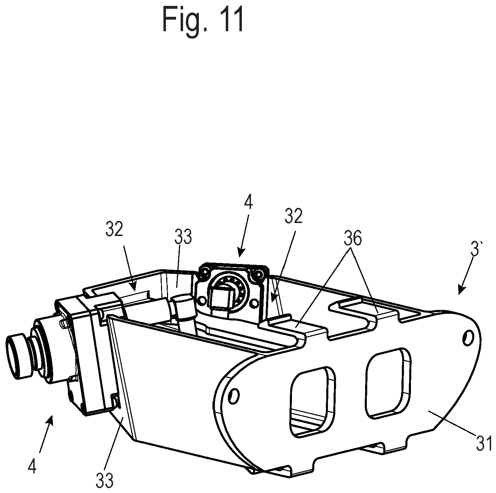

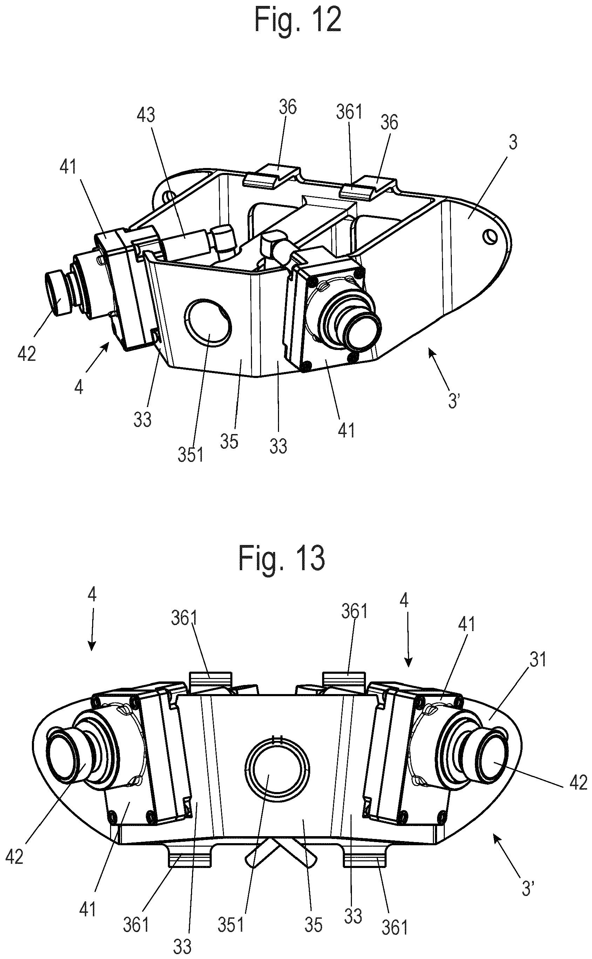

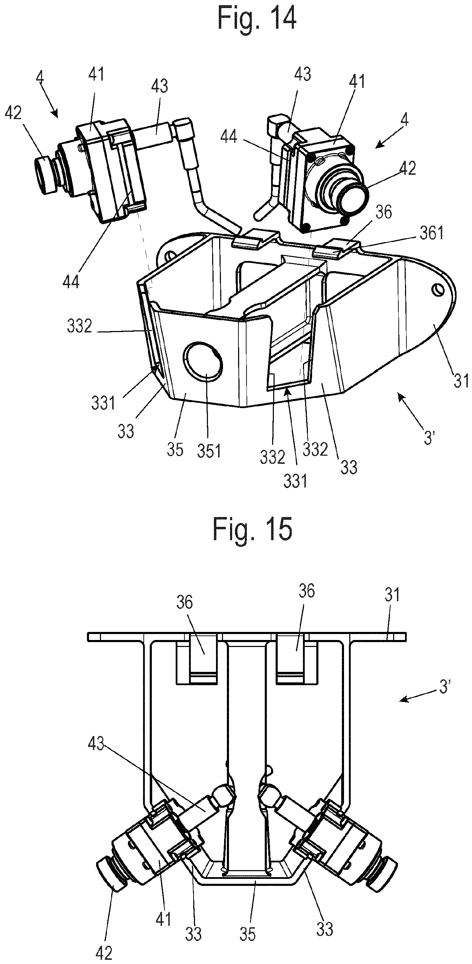

Die in den Figuren 11 bis 15 dargestellte Ausführungsvariante gehört nicht zur Erfindung. In dieser alternativen Ausführungsvariante ist der Kamerakorpus 41 mit seitlich eingebrachten Nuten 44 ausgeführt, die der Aufnahme der zueinander parallel ausgerichteten Gleitkanten 332 einer sacklochartigen Aussparung 331 der Außenwand 33 eines Kameraträgerteils 3' dienen.

Eine Innenwand 34 mit sacklochartigen Aussparung 341 ist bei dieser Ausführungsvariante nicht notwendig, da durch die Halterung des Kamerakorpus 41 in der Außenwand 33 des Kameraträgerteils 3' bereits ebenfalls eine vorbestimmte Ausrichtung und ortsfeste Fixierung der Kamera 4 in der horizontalen Ebene gewährleistet ist.

Denkbar ist auch die Ausbildung der Außenwand 33 bzw. der Außenwände 33 mit einer Nut zur Aufnahme von seitlich aus dem Kameragehäuse vorstehenden Führungsstegen zur Ortsfixierung der Kamera(s) 4 in der horizontalen Ebene an einem Kameraträgerteil 3' mit wie oben beschriebenen Außenwänden 33.

Zur einfachen und positionsgenauen Positionierung des Hüllgehäuses 2 auf dem Kameraträgerteil 3 weist das Kameraträgerteil 3 und das Hüllgehäuse 2 jeweils Führungskonturen 26, 29A, 29B, 351, 37A, 37B zur Positionierung des Hüllgehäuses 2 auf dem Kameraträgerteil 3 auf.

Das Kameraträgerteil 3 und das Hüllgehäuse 2 sind dabei lösbar aneinander befestigbar, bevorzugt arretierbar.

Abweichend davon kann das Hüllgehäuse 2 an dem Kameraträgerteil 3 auch mittels anderer Befestigungselemente, vorzugsweise Schrauben, montiert werden. In diesem Fall kann eine Arretierung entfallen.

Die lösbare Arretierbarkeit wird bei der hier gezeigten Ausführungsvariante dadurch verwirklicht, dass das Kameraträgerteil 3 und das Hüllgehäuse 2 durch mehrere lösbare Schnappverbindungen aneinander festgelegt ist.

Wie beispielsweise in den **Figuren** 3-6 und **10** gezeigt, weist das Kameraträgerteil 3 sich von einer rückseitigen Montagewand 31 in Richtung eines frontseitigen Endes erstreckende Rastzungen 36 mit daran angeformten Rastnasen 361 auf.

Die Rastnasen 361 sind im aufgeschobenen Zustand des Hüllgehäuses 2 in jeweilige Rastaufnahmen 27, beispielsweise gezeigt in Figur 7, in der Innenseite der Gehäusewand 21 des Hüllgehäuses 2 eingerastet.

Um ein beschädigungsfreies Lösen des Hüllgehäuses 2 vom Kameraträgerteil 3 zu ermöglichen, sind die Rastnasen 361 bevorzugt mit Fasen 362 zum Lösen der Verrastung ab einer vorbestimmten Krafteinwirkung auf das Hüllgehäuse 2 entgegen einer Aufschieberichtung A versehen.

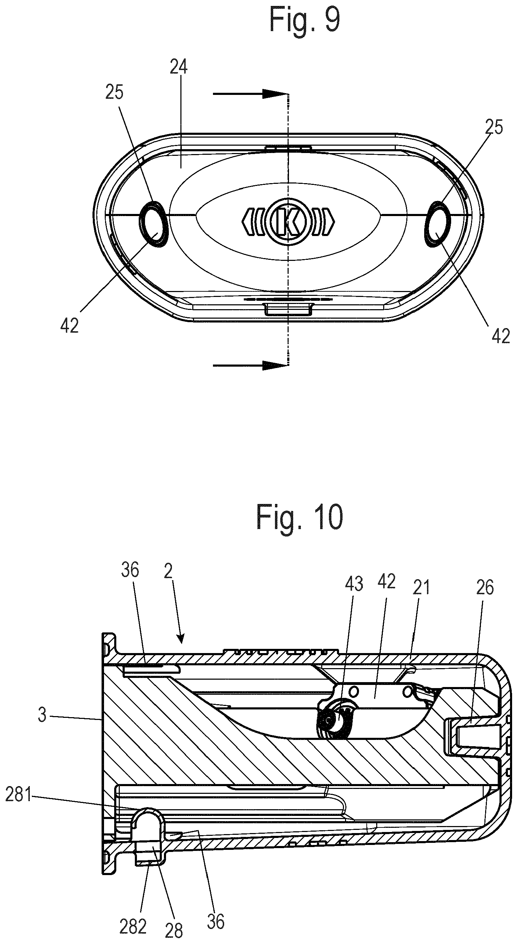

Zur positionsgenauen Ausrichtung des Hüllgehäuses 2 auf dem Kameraträgerteil 3 ist, wie in den Figuren 4 und 10 zu erkennen ist, aus der Innenseite der Gehäusewand 21 des Hüllgehäuses 2 im Bereich des frontseitigen Endes eine stiftartig ausgebildete Führungskontur 26 angeformt, die im auf das Kameraträgerteil 3 aufgeschobenen Zustand in eine als Ausnehmung ausgebildete Führungskontur 351 in einer frontseitigen Wand 35 des Kameraträgerteils 3 vorsteht.

Wie weiter in Figur 1, 5, 7 und 8 dargestellt ist, ist aus der Innenseite seitlicher Bereiche der Gehäusewand 21 des Hüllgehäuses 2 wenigstens eine als Vorsprung oder Nut ausgebildete Führungskontur 29A, 29B angeformt, die im auf das Kameraträgerteil 3 aufgeschobenen Zustand des Hüllgehäuses 2 in eine als Ausnehmung oder Vorsprung ausgebildete Führungskontur 37A, 37B in der Montagewand 31 des Kameraträgerteils 3 vorsteht.

Die als Vorsprünge ausgebildeten Führungskonturen 29A sind als sich in Aufschieberichtung A erstreckender Vorsprünge ausgebildet, an denen eine jeweilige Aussparung, hier an der Montagewand 31 des Kameraträgerteils 3, sich im aufgeschobenen Zustand abstützt.

Die Führungskontur 29B, gezeigt in Figur 8, ist hier als Nut ausgebildet, die einen an der Montagewand 31 ausgebildeten Vorsprung 37B aufnimmt.

Das Hüllgehäuse 2 ist bis auf die Aufnahmeöffnung 20 und die Fensteröffnungen 25 als geschlossene Hülle ausgebildet. Bei Regen oder beim Waschen des Kraftfahrzeugs kann jedoch Wasser durch die Fensteröffnungen 25 in das Hüllgehäuse 2 eintreten. Die Aufnahmeöffnung 20 ist im montierten Zustand der Kamerahalterung 1 am Fahrzeugaufbau durch die Wand des Fahrzeugaufbaus geschlossen.

Um hier ein Ansteigen von eintretendem Wasser in den Bereich der in der Kamerahalterung 1 aufgenommenen Kameras 4 zu verhindern, ist bei der hier gezeigten bevorzugten Ausführungsvariante, wie in Figur 7 und Figur 10 gezeigt ist, ein Boden 23 der Gehäusewand 21 des Hüllgehäuses 2 mit einer Ablauföffnung 28 versehen.

Die Ablauföffnung 28 ist dabei als Loch oder Bohrung im Boden 23 der Gehäusewand 21 ausgebildet.

Im hier gezeigten bevorzugten Ausführungsbeispiel ist zur Abschirmung der Kamera 4 bzw. der Kameras 4 an einer dem Innenraum des Hüllgehäuses 2 abgewandten Außenseite und einer dem Innenraum des Hüllgehäuses 2 zugewandten Innenseite eine die Ablauföffnung 28 teilweise abschirmende Blende 281, 282 angeordnet. Denkbar ist prinzipiell auch die Anordnung einer solchen Blende nur im Innenraum oder nur im Außenraum.

Bei der hier gezeigten Ausführungsvariante sind die Blenden 281, 282 am Hüllgehäuse 2 angeformt. Die Blende 281 im Innenraum des Hüllgehäuses 2 ist dabei, wie in Figur 10 gut zu erkennen ist, zu den Kameras 4 hin geschlossen und zur Aufnahmeöffnung 20 hin offen.

Durch diese Blenden 281, 282 wird verhindert, dass insbesondere beim Waschen, insbesondere mit einem Hochdruckreiniger, möglichst wenig Wasser ins Innere des Hüllgehäuses 2 gelangen kann.

Die Kameras 4 selbst sind bei dieser Ausführungsvariante wasserdicht ausgeführt, was eine besonders einfache und fehlerfreie Montage der Kamerahalterung 1 am Fahrzeugaufbau ermöglicht.

Die lösbaren Schnappverbindungen zwischen Kameraträgerteil 3 und Hüllgehäuse 2 dienen im Wesentlichen der Vorfixierung des Hüllgehäuses 2 am Kameraträgerteil 3.

Das Hüllgehäuse 2 wird bevorzugt nach Befestigung am Kameraträgerteil 3 am Fahrzeugaufbau verklebt. Dazu ist die Aufnahmeöffnung 20 des Hüllgehäuses 2 bevorzugt von einer Dichtlippe 22 zur Anlage am Fahrzeugaufbau umrahmt. Die dem frontseitigen Ende des Hüllgehäuses 2 abgewandte Stirnfläche der Dichtlippe 22 weist dabei bevorzugt eine Nut 221 auf, die der Aufnahme eines Adhäsivs dient.

So kann nach dem vollständigen Aufschieben des Hüllgehäuses 2 auf das Kameraträgerteil 3 mit in der Nut 221 der Dichtlippe 22 eingebrachtem Kleber das Hüllgehäuse 2 am Fahrzeugaufbau verklebt werden, so dass nach dem Austrocknen des Adhäsivs die Fixierung des Hüllgehäuses 2 im Wesentlichen über die Verklebung am Fahrzeugaufbau erfolgt. Die Schnappverbindungen dienen dabei der Unterstützung der Klebeverbindung.

### BEZUGSZEICHENLISTE

- 1: Kamerahalterung

- 2: Hüllgehäuse
- 20: Aufnahmeöffnung
- 21: Gehäusewand
- 22: Dichtlippe
- 221: Nut
- 23: Boden
- 24: Gehäusewandbereich
- 25: Fensteröffnung
- 26: Führungskontur
- 27: Rastaufnahme
- 28: Ablauföffnung
- 281: Blende
- 282: Blende
- 29A, B: Führungskontur

- 3, 3': Kameraträgerteil
- 31: Montagewand
- 32: Aufnahmeschacht
- 33: Außenwand
- 331: Aussparung
- 332: Gleitkante
- 34: Innenwand
- 341: Aussparung
- 342: Gleitkante
- 35: Führungskontur
- 36: Rastzunge
- 361: Rastnase
- 362: Fase
- 37A, B: Führungskontur

- 4: Kamera
- 41: Kamerakorpus

- 42: Objektiv
- 43: Steckanschluss
- 44: Nut

- A: Aufschieberichtung

## Patentansprüche

1. Kamerahalterung (1) zur Befestigung an einem Fahrzeugaufbau eines Kraftfahrzeugs, insbesondere eines Busses oder Nutzfahrzeugs, oder einem Anhänger des Kraftfahrzeugs, aufweisend
ein an dem Fahrzeugaufbau fixierbares Kameraträgerteil (3, 3') zur Aufnahme zumindest eines Kamerakorpus (41) einer Kamera (4),
ein auf das Kameraträgerteil (3, 3') aufstülpbares Hüllgehäuse (2),
wobei das Hüllgehäuse (2)
eine Aufnahmeöffnung (20) zur Aufnahme des Kameraträgerteils (3, 3') und wenigstens eine in einem Gehäusewandbereich (24) vorgesehene Fensteröffnung (25) aufweist, in oder hinter der ein Objektiv (42) der Kamera (4) positionierbar ist,
wobei das Kameraträgerteil (3, 3') und das Hüllgehäuse (2) jeweils Führungskonturen (26, 29A, 29B, 351, 37A, 37B) zur Positionierung des Hüllgehäuses (2) auf dem Kameraträgerteil (3, 3') aufweisen,
wobei das Kameraträgerteil (3, 3') und das Hüllgehäuse (2) lösbar aneinander befestigbar sind,
**dadurch gekennzeichnet, dass**
das Kameraträgerteil (3, 3') wenigstens einen Aufnahmeschacht (32) zur Aufnahme des zumindest einen Kamerakorpus (41) der Kamera (4) aufweist,
wobei der Aufnahmeschacht (32) durch eine Außenwand (33) und eine parallel dazu ausgerichtete Innenwand (34) des Kameraträgerteils (3) begrenzt ist, wobei die Außenwand (33) und die Innenwand (34) jeweils eine sacklochartige Aussparung (331, 341) mit zueinander parallel ausgerichteten Gleitkanten (332, 342) aufweisen, wobei in der Aussparung (331) der Außenwand (33) das Objektiv (42) und in der Aussparung (341) der Innenwand (33) ein aus einer Rückseite des Kamerakorpus (41) vorstehender Steckanschluss (43) der Kamera (4) aufnehmbar ist, wobei der Kamerakorpus (41) zwischen der Außenwand (33) und der Innenwand (34) aufnehmbar ist.

2. Kamerahalterung (1) nach Anspruch 1, **dadurch gekennzeichnet, dass** der Aufnahmeschacht (32) eine Außenwand (33) aufweist, wobei die Außenwand (33) eine sacklochartige Aussparung (331) mit zueinander parallel ausgerichteten Gleitkanten (332) aufweist, wobei die Gleitkanten (332) in seitliche Nuten (44) des Kamerakorpus (41) vorstehen.

3. Kamerahalterung (1) nach einem der vorstehenden Ansprüche, **dadurch gekennzeichnet, dass** das Kameraträgerteil (3, 3') zwei winklig zueinander angeordnete Aufnahmeschächte (32) zur Aufnahme jeweils einer Kamera (4) und das Hüllgehäuse (2) zwei Fensteröffnungen (25) in winklig zueinander ausgerichteten Gehäusewandbereichen (24) zur Aufnahme eines Objektivs (42) einer jeweiligen der Kameras (4) aufweist.

4. Kamerahalterung (1) nach einem der vorstehenden Ansprüche, **dadurch gekennzeichnet, dass** das Kameraträgerteil (3, 3') und das Hüllgehäuse (2) durch mehrere lösbare Schnappverbindungen aneinander festgelegt ist.

5. Kamerahalterung (1) nach Anspruch 4, **dadurch gekennzeichnet, dass** das Kameraträgerteil (3, 3') sich von einer rückseitigen Montagewand (31) in Richtung eines frontseitigen Endes erstreckende Rastzungen (36) mit daran angeformten Rastnasen (361) aufweist, die im aufgeschobenen Zustand des Hüllgehäuses (2) in jeweilige Rastaufnahmen (27) in der Innenseite einer Gehäusewand (21) des Hüllgehäuses (2) eingerastet sind.

6. Kamerahalterung (1) nach Anspruch 5, **dadurch gekennzeichnet, dass** die Rastnasen (361) mit Fasen (362) zum Lösen der Verrastung ab einer vorbestimmten Krafteinwirkung auf das Hüllgehäuse (2) entgegen einer Aufschieberichtung (A) versehen sind.

7. Kamerahalterung (1) nach einem der vorstehenden Ansprüche, **dadurch gekennzeichnet, dass** aus der Innenseite der Gehäusewand (21) des Hüllgehäuses (2) im Bereich des frontseitigen Endes eine stiftartig ausgebildete Führungskontur (26) angeformt ist, die im auf das Kameraträgerteil (3, 3') aufgeschobenen Zustand in eine als Ausnehmung ausgebildete Führungskontur (351) in einer frontseitigen Wand (35) des Kameraträgerteils (3, 3') vorsteht.

8. Kamerahalterung (1) nach einem der vorstehenden Ansprüche, **dadurch gekennzeichnet, dass** aus der Innenseite seitlicher Bereiche der Gehäusewand (21) des Hüllgehäuses (2) wenigstens eine als Vorsprung oder Nut ausgebildete Führungskontur (29A, 29B) angeformt ist, die im auf das Kameraträgerteil (3, 3') aufgeschobenen Zustand in eine als Ausnehmung oder Vorsprung ausgebildete Führungskontur (37A, 37B) in der Montagewand (31) des Kameraträgerteils (3, 3') vorsteht.

9. Kamerahalterung (1) nach einem der vorstehenden Ansprüche, **dadurch gekennzeichnet, dass** ein Boden (23) der Gehäusewand (21) des Hüllgehäuses (2) eine Ablauföffnung (28) aufweist.

10. Kamerahalterung (1) nach Anspruch 9, **dadurch gekennzeichnet, dass** an einer dem Innenraum des Hüllgehäuses (2) abgewandten Außenseite und/oder einer dem Innenraum des Hüllgehäuses (2) zugewandten Innenseite eine die Ablauföffnung (28) teilweise abschirmende Blende (281, 282) angeordnet, insbesondere angeformt ist.

11. Kamerahalterung (1) nach einem der vorstehenden Ansprüche, **dadurch gekennzeichnet, dass** die Aufnahmeöffnung (20) des Hüllgehäuses (2) von einer Dichtlippe (22) zur Anlage am Fahrzeugaufbau umrahmt ist.

12. Kamerahalterung (1) nach Anspruch 11, **dadurch gekennzeichnet, dass** die dem frontseitigen Ende des Hüllgehäuses (2) abgewandte Stirnfläche der Dichtlippe (22) eine Nut (221) zur Aufnahme eines Adhäsivs aufweist.

13. Kamerahalterung (1) nach einem der vorstehenden Ansprüche, **dadurch gekennzeichnet, dass** die wenigstens eine in dem Gehäusewandbereich (24) vorgesehene Fensteröffnung (25) durch ein transparentes Material verschlossen ist.

14. Kraftfahrzeug, insbesondere Bus oder Nutzfahrzeug, **dadurch gekennzeichnet, dass** das Kraftfahrzeug wenigstens eine Kamerahalterung (1) nach einem der vorstehenden Ansprüche aufweist.

15. Anhänger, insbesondere Nutzfahrzeuganhänger, **dadurch gekennzeichnet, dass** der Anhänger wenigstens eine Kamerahalterung (1) nach einem der vorstehenden Ansprüche 1 bis 13 aufweist.

## Claims

1. Camera mount (1) for securing to a vehicle body of a motor vehicle, in particular a bus or utility vehicle, or a trailer of the motor vehicle, comprising
a camera support part (3, 3') fixable to the vehicle body for receiving at least one camera body (41) of a camera (4),
an encasing housing (2) which can be slipped onto the camera support part (3, 3'),
wherein the encasing housing (2)
has a receiving opening (20) for receiving the camera support part (3, 3') and at least one window opening (25) provided in a wall housing region (24), in or behind which a lens (42) of the camera (4) can be positioned,
wherein the camera support part (3, 3') and the encasing housing (2) each have guide contours (26, 29A, 29B, 351, 37A, 37B) for positioning the encasing housing (2) on the camera support part (3, 3'),
wherein the camera support part (3, 3') and the encasing housing (2) can be detachably secured to one another,
**characterized in that**
the camera support part (3, 3') has at least one receiving shaft (32) for receiving the at least one camera body (41) of the camera (4), wherein the receiving shaft (32) is delimited by an outer wall (33) and an inner wall (34) of the camera support part (3) aligned parallel thereto, wherein the outer wall (33) and the inner wall (34) each have a blind-hole-like recess (331, 341) with sliding edges (332, 342) aligned parallel to one another, wherein the lens (42) can be accommodated in the recess (331) of the outer wall (33) and a plug-in connection (43) of the camera (4) projecting from a rear side of the camera body (41) can be accommodated in the recess (341) of the inner wall (33), wherein the camera body (41) can be accommodated between the outer wall (33) and the inner wall (34).

2. Camera mount (1) according to claim 1, **characterized in that** the receiving shaft (32) has an outer wall (33), the outer wall (33) having a blind-hole-like recess (331) with sliding edges (332) aligned parallel to one another, the sliding edges (332) projecting into lateral grooves (44) of the camera body (41).

3. Camera mount (1) according to any one of the preceding claims, **characterized in that** the camera support part (3, 3') has two receiving shafts (32) arranged at an angle to one another for receiving a camera (4) respectively and the encasing housing (2) has two window openings (25) in housing wall regions (24) aligned at an angle to one another for receiving a lens (42) of a respective camera (4).

4. Camera mount (1) according to any one of the preceding claims, **characterized in that** the camera support part (3, 3') and the encasing housing (2) are fixed to one another by a plurality of detachable snap connections.

5. Camera mount (1) according to claim 4, **characterized in that** the camera support part (3, 3') has latching lugs (36) which extend from a rear mounting wall (31) in the direction of a front end and have latching lugs (361) formed thereon, which latching lugs are latched into respective latching mounts (27) in the inside of a housing wall (21) of the encasing housing (2) when the encasing housing (2) is in the pushed-on state.

6. Camera mount (1) according to claim 5, **characterized in that the** latching lugs (361) are provided with chamfers (362) for releasing the latching from a predetermined application of force to the encasing housing (2) against a push-on direction (A).

7. Camera mount (1) according to any one of the preceding claims, **characterized in that** a pin-like guide contour (26) is formed on the inside of the housing wall (21) of the encasing housing (2) in the region of the front end, which guide contour, when pushed onto the camera support part (3, 3'), projects into a guide contour (351) formed as a recess in a front wall (35) of the camera support part (3, 3').

8. Camera mount (1) according to any one of the preceding claims, **characterized in that** at least one guide contour (29A, 29B) in the form of a projection or groove is formed on the inside of lateral regions of the housing wall (21) of the encasing housing (2), which guide contour, when pushed onto the camera support part (3, 3'), projects into a guide contour (37A, 37B) in the form of recess or projection in the mounting wall (31) of the camera support part (3, 3').

9. Camera mount (1) according to any one of the preceding claims, **characterized in that** a base (23) of the housing wall (21) of the encasing housing (2) has a drain outlet (28).

10. Camera mount (1) according to claim 9, **characterized in that** a screen (281, 282) partly shielding the drain outlet (28) is arranged, in particular moulded, onto an outer side facing away from the interior of the encasing housing (2) and/or an inner side facing the interior of the encasing housing (2).

11. Camera mount (1) according to any one of the preceding claims, **characterized in that** the receiving opening (20) of the encasing housing (2) is framed by a sealing lip (22) for contact with the vehicle body.

12. Camera mount (1) according to claim 11, **characterized in that** the end face of the sealing lip (22) facing away from the front end of the encasing housing (2) has a groove (221) for receiving an adhesive.

13. Camera mount (1) according to any one of the preceding claims, **characterized in that** the at least one window opening (25) provided in the housing wall region (24) is sealed by a transparent material.

14. Motor vehicle, in particular bus or utility vehicle, **characterized in that** the motor vehicle has at least one camera mount (1) according to any one of the preceding claims.

15. Trailer, in particular utility vehicle trailer, **characterized in that** the trailer has at least one camera mount (1) according to any one of the preceding claims 1 to 13.

## Revendications

1. Support de caméra (1) destiné à être fixé sur la carrosserie d'un véhicule automobile, en particulier d'un bus ou d'un véhicule utilitaire, ou sur une remorque du véhicule automobile, présentant
une partie de support de caméra (3, 3') pouvant être fixée sur la carrosserie pour recevoir au moins un corps de caméra (41) d'une caméra (4),
un boîtier d'enveloppe (2) pouvant être emboîté sur la partie de support de caméra (3, 3'),
dans lequel le boîtier d'enveloppe (2)
présente une ouverture de réception (20) pour recevoir la partie de support de caméra (3, 3') et au moins une ouverture de fenêtre (25) prévue dans une zone de paroi de boîtier (24), dans ou derrière laquelle un objectif (42) de la caméra (4) peut être positionné,
dans lequel la partie de support de caméra (3, 3') et le boîtier d'enveloppe (2) présentent respectivement des contours de guidage (26, 29A, 29B, 351, 37A, 37B) pour le positionnement du boîtier d'enveloppe (2) sur la partie de support de caméra (3, 3'),
dans lequel la partie de support de caméra (3, 3') et le boîtier d'enveloppe (2) peuvent être fixés l'un à l'autre de manière amovible,
**caractérisé en ce que**
la partie de support de caméra (3, 3') présente au moins un puits de réception (32) pour recevoir l'au moins un corps de caméra (41) de la caméra (4), dans lequel le puits de réception (32) est délimité par une paroi extérieure (33) et une paroi intérieure (34) de la partie de support de caméra (3) orientée parallèlement à celle-ci, dans lequel la paroi extérieure (33) et la paroi intérieure (34) présentent respectivement un évidement de type à trou borgne (331, 341) avec des arêtes de glissement (332, 342) orientées parallèlement entre elles, dans lequel l'objectif (42) peut être reçu dans l'évidement (331) de la paroi extérieure (33) et une connexion enfichable (43) de la caméra (4) faisant saillie d'un côté arrière du corps de caméra (41) peut être reçue dans l'évidement (341) de la paroi intérieure (33), dans lequel le corps de caméra (41) peut être reçu entre la paroi extérieure (33) et la paroi intérieure (34).

2. Support de caméra (1) selon la revendication 1, **caractérisé en ce que** le puits de réception (32) présente une paroi extérieure (33), dans lequel la paroi extérieure (33) présente un évidement de type à trou borgne (331) avec des arêtes de glissement (332) orientées parallèlement entre elles, dans lequel les arêtes de glissement (332) font saillie dans des rainures latérales (44) du corps de caméra (41).

3. Support de caméra (1) selon l'une quelconque des revendications précédentes, **caractérisé en ce que** la partie de support de caméra (3, 3') présente deux puits de réception (32) disposés l'un à l'autre selon un angle pour recevoir respectivement une caméra (4), et le boîtier d'enveloppe (2) présente deux ouvertures de fenêtre (25) dans des zones de paroi de boîtier (24) orientées entre elles selon un angle pour recevoir un objectif (42) d'une caméra respective (4).

4. Support de caméra (1) selon l'une quelconque des revendications précédentes, **caractérisé en ce que** la partie de support de caméra (3, 3') et le boîtier d'enveloppe (2) sont fixés l'un à l'autre par plusieurs liaisons à encliquetage amovibles.

5. Support de caméra (1) selon la revendication 4, **caractérisé en ce que** la partie de support de caméra (3, 3') présente des languettes d'encliquetage (36) s'étendant depuis une paroi de montage arrière (31) en direction d'une extrémité avant avec des talons d'encliquetage (361) formés sur celles-ci qui sont encliquetés dans des logements d'encliquetage respectifs (27) dans le côté intérieur d'une paroi de boîtier (21) du boîtier d'enveloppe (2) à l'état enfilé du boîtier d'enveloppe (2).

6. Support de caméra (1) selon la revendication 5, **caractérisé en ce que** les talons d'encliquetage (361) sont dotés de chanfreins (362) pour desserrer l'encliquetage à partir d'une force exercée prédéterminée sur le boîtier d'enveloppe (2) contre une direction d'enfilage (A).

7. Support de caméra (1) selon l'une quelconque des revendications précédentes, **caractérisé en ce qu'**un contour de guidage (26) de type broche est formé sur le côté intérieur de la paroi de boîtier (21) du boîtier d'enveloppe (2) au niveau de l'extrémité avant qui, à l'état enfilé sur la partie de support de caméra (3, 3'), fait saillie dans un contour de guidage (351) formé comme un évidement dans une paroi avant (35) de la partie de support de caméra (3, 3').

8. Support de caméra (1) selon l'une quelconque des revendications précédentes, **caractérisé en ce qu'**au moins un contour de guidage (29A, 29B) sous la forme d'une saillie ou d'une rainure est formé depuis le côté intérieur de zones latérales de la paroi de boîtier (21) du boîtier d'enveloppe (2) qui, à l'état enfilé sur la partie de support de caméra (3, 3'), fait saillie dans un contour de guidage (37A, 37B) formé comme un évidement ou une saillie dans la paroi de montage (31) de la partie de support de caméra (3, 3').

9. Support de caméra (1) selon l'une quelconque des revendications précédentes, **caractérisé en ce qu'**un fond (23) de la paroi de boîtier (21) du boîtier d'enveloppe (2) présente une ouverture d'évacuation (28).

10. Support de caméra (1) selon la revendication 9, **caractérisé en ce qu'**un cache (281, 282) protégeant partiellement l'ouverture d'évacuation (28) est disposé, en particulier formé, sur un côté extérieur opposé à l'espace intérieur du boîtier d'enveloppe (2) et/ou sur un côté intérieur tourné vers l'espace intérieur du boîtier d'enveloppe (2).

11. Support de caméra (1) selon l'une quelconque des revendications précédentes, **caractérisé en ce que** l'ouverture de réception (20) du boîtier d'enveloppe (2) est encadrée par une lèvre d'étanchéité (22) pour entrer en contact avec la carrosserie.

12. Support de caméra (1) selon la revendication 11, **caractérisé en ce que** la surface frontale de la lèvre d'étanchéité (22) opposée à l'extrémité avant du boîtier d'enveloppe (2) présente une rainure (221) pour recevoir un adhésif.

13. Support de caméra (1) selon l'une quelconque des revendications précédentes, **caractérisé en ce que** l'au moins une ouverture de fenêtre (25) prévue dans la zone de paroi de boîtier (24) est fermée par un matériau transparent.

14. Véhicule automobile, en particulier bus ou véhicule utilitaire, **caractérisé en ce que** le véhicule automobile présente au moins un support de caméra (1) selon l'une quelconque des revendications précédentes.

15. Remorque, en particulier remorque de véhicule utilitaire, **caractérisée en ce que** la remorque présente au moins un support de caméra (1) selon l'une quelconque des revendications précédentes 1 à 13.
